# EUROPEAN PATENT SPECIFICATION

(11) **EP 3 039 366 B1**
(45) Date of publication and mention of the grant of the patent: **13.11.2019**
(21) Application number: 14742042.6
(22) Date of filing: 24.06.2014
(51) Int. Cl.: F28D 1/04, F28D 15/02, F28D 20/02

(54) **THERMAL ENERGY STORAGE ASSEMBLY WITH PHASE CHANGE MATERIALS**
WÄRMEENERGIE-SPEICHERANORDNUNG MIT PHASENWECHSELMATERIALIEN
ENSEMBLE DE STOCKAGE D'ÉNERGIE THERMIQUE DOTÉ DE MATÉRIAUX DE CHANGEMENT DE PHASE

(30) Priority: 29.08.2013 US 201361871666 P
(43) Date of publication of application: 06.07.2016
(73) Proprietor: Carrier Corporation, Farmington, CT 06034 (US)
(72) Inventor: MA, Zidu, Ellington, CT 06029 (US); CHOPKO, Robert A., Syracuse, NY 13221 (US); RYDKIN, Ivan, Syracuse, NY 13221 (US); CLOUGH, Warren, Syracuse, NY 13221 (US); LOMBARDO, Mary Teresa, Farmington, CT 06034 (US)
(74) Representative: Dehns
(86) International application number: PCT/US2014/043834
(87) International publication number: WO 2015/030915

(56) References cited:
- EP-A2- 2 381 193

## Description

### BACKGROUND OF THE INVENTION

Embodiments of the invention relate to refrigeration systems and in particular to a refrigeration system including a phase-change material.

Refrigeration systems compress and circulate a refrigerant throughout a closed-loop heat transfer fluid circuit to transfer heat to and from a climate controlled space. In a basic refrigerant system, a heat transfer fluid vapor is compressed in a compressor from a lower pressure to a higher pressure and delivered to a downstream heat rejection heat exchanger, commonly referred to as a condenser. From the condenser, where heat is typically transferred from the heat transfer fluid to an ambient environment or to a secondary heat transfer fluid, high-pressure refrigerant flows to an expansion device where it is expanded to a lower pressure and temperature and then is routed to an evaporator. In the evaporator, the heat transfer fluid vaporizes and cools the air in the conditioned environment or the secondary heat transfer fluid. From the evaporator, the refrigerant vapor is returned to the compressor.

Document EP 2381193 A2 discloses a refrigeration system with an improved condenser configuration according to the preamble of claim 1.

### BRIEF DESCRIPTION OF THE INVENTION

Embodiments of the invention include a thermal energy storage assembly having a first pipe configured to have a heat transfer fluid flow through a bore of the first pipe. A second pipe surrounds the first pipe. A phase change material fills the space between the first pipe and the second pipe, the phase change material storing thermal energy from the heat transfer fluid.

Additional embodiments include a refrigeration system including a cooling unit configured to cool a heat transfer fluid and a thermal energy storage assembly. The thermal energy storage assembly is configured to circulate the heat transfer fluid from the cooling unit and back to the cooling unit to refrigerate a compartment. The thermal energy storage assembly includes a first pipe configured to have the heat transfer fluid flow through a bore of the first pipe and a second pipe surrounding the first pipe. A phase change material fills the space between the first pipe and the second pipe and stores thermal energy from the heat transfer fluid, or releases thermal energy to the heat transfer fluid.

Additional embodiments of the invention include a mobile refrigeration vehicle including a refrigerated compartment having a thermal energy storage assembly attached to at least one wall of the refrigerated compartment. The thermal energy storage assembly includes a first pipe configured to have the heat transfer fluid flow through a bore of the first pipe and a second pipe surrounding the first pipe. A phase change material fills the space between the first pipe and the second pipe and stores cold thermal energy from or release cold thermal energy to the heat transfer fluid.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 illustrates a refrigeration system according to an embodiment of the invention;
FIG. 2 is a cross-section view of a thermal energy storage assembly according to an embodiment of the invention;
FIG. 3 is a cross-section view of a thermal energy storage assembly according to another embodiment of the invention; and
FIG. 4 illustrates a refrigerated vehicle according to an embodiment of the invention.

The detailed description explains embodiments of the invention, together with advantages and features, by way of example with reference to the drawings.

### DETAILED DESCRIPTION OF THE INVENTION

Conventional refrigeration systems for vehicles utilize eutectic plates filled with mineral salt solutions to provide refrigeration. Embodiments of the present invention provide refrigeration using a first pipe enclosed within a second pipe, with a phase change material filling the area between the two pipes. A heat transfer fluid flows within the first pipe and the phase change material exchanges heat with the heat transfer fluid to maintain a target area at a desired temperature.

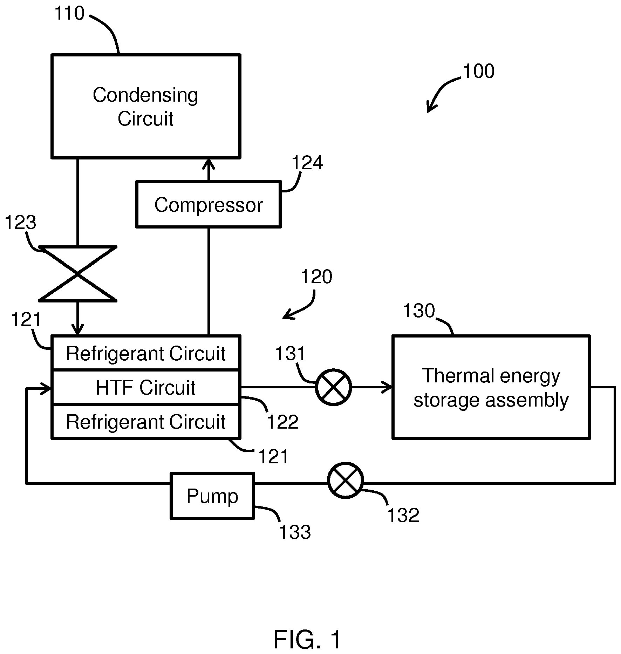

FIG. 1 illustrates a refrigeration system 100 according to an embodiment of the invention. The system 100 includes a condensing circuit 110, an evaporator assembly 120 and a thermal energy storage assembly 130. In one embodiment, a compressor 124 heats a refrigerant in a gaseous state, which heats the refrigerant and provides pressure for the refrigerant to flow between the condensing circuit 110 and the evaporator assembly. The condensing circuit 110 condenses the hot refrigerant vapor to a pressurized moderate temperature liquid. In one embodiment, a fan (not shown) blows air over the condensing circuit 110 to transfer heat from the refrigerant to the air, cooling the refrigerant. The pressure of the refrigerant is reduced by an expansion device 123 and the refrigerant is provided to an evaporator 120. The evaporator 120 uses the cooled refrigerant to cool a heat transfer fluid that is circulated through the thermal energy storage assembly 130. The evaporator 120 includes a refrigerant circuit 121 and a heat transfer fluid circuit 122. The evaporator 120 is configured such that it simultaneously cools the heat transfer fluid from the thermal energy storage assembly 130 and the air circulated by a fan (not shown) between the evaporator 120 and the refrigerated space. The refrigerant circuit 121 may include, for example, tubes containing the refrigerant that surround tubes carrying the heat transfer fluid to cool the heat transfer fluid.

The heat transfer fluid is transmitted from the evaporator assembly 120 to the thermal energy storage assembly 130. In one embodiment, the thermal energy storage assembly 130 is located in a compartment that is to be refrigerated. For example, in one embodiment, the thermal energy storage assembly 130 is located in the walls of the compartment, or the thermal energy storage assembly 130 may be attached to the walls of the compartment. Valves 131 and 132 control the flow of the heat transfer fluid to and from the thermal energy storage assembly 130. A pump 133 may be used to control a rate of flow of the heat transfer fluid to and from the thermal energy storage assembly 130. The cooling load split between cooling return air and the heat transfer fluid can be controlled by varying the flow rate of the heat transfer fluid. The pump 133 is turned on when the thermal storage is charged and discharged through the evaporator 120. The cooling of the air from the thermal energy storage assembly 130 can also be done by running the pump 133 to circulate the heat transfer fluid between the thermal energy storage assembly 130 and the evaporator 120, while the compressor 124 is turned off, or with the compressor 124 turned on to boost the cooling capacity with the stored cold thermal energy.

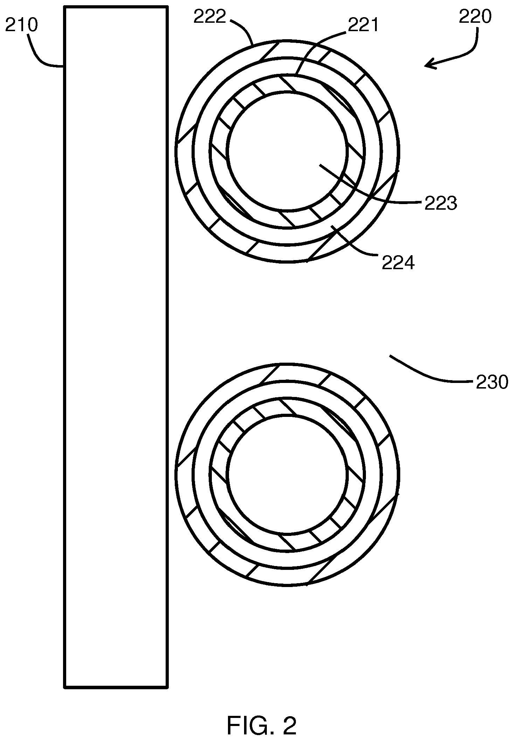

FIG. 2 illustrates a thermal energy storage assembly 220 according to an embodiment of the invention. The assembly 220 includes a first pipe 221 and a second pipe 222 surrounding the first pipe 221. In one embodiment, the first pipe 221 and the second pipe 222 are co-axial. However, embodiments of the invention encompass any configuration of the first pipe 221 and the second pipe 222 where the first pipe 221 is located within the second pipe 222, such as multiple pipes located inside the second pipe 222, the first pipe 221 being offset from the center axis of the second pipe 222, or any other configuration. The first pipe 221 is connected to the evaporator assembly 120 of FIG. 1, and the heat transfer fluid flows through the bore 223 of the first pipe 221. The area 224 between the first pipe 221 and the second pipe 222 is filled with a phase change material. The phase change material stores the cold thermal energy from the heat transfer fluid to cool a compartment in which the thermal energy storage assembly 220 is located. Alternatively, the cold thermal energy stored in the thermal energy storage assembly 220 may be released to the heat transfer fluid which circulates back to the evaporator to cool the air flowing through the evaporator. Typical phase change materials include paraffin waxes, fatty acids from natural oils, or inorganic salt solution.

In the present specification and claims, a phase change material is defined as a material that has a melting temperature (from solid to liquid) at which it absorbs heat while maintaining a substantially constant temperature. In other words, as the phase change material is heated up from a temperature below the melting temperature to the melting temperature, the temperature of the phase change material rises accordingly. However, when the phase change material reaches its melting temperature, the temperature of the phase change material remains substantially the same as it absorbs heat, before all the phase change material becomes liquid. Accordingly, the phase change material located between the first pipe 221 and the second pipe 222 of the present invention acts as a robust refrigeration material that is able to absorb heat from an atmosphere that is being cooled, and that may be refreshed, or cooled, by the heat transfer fluid in the bore 223 of the first pipe 221.

In embodiments of the invention, the first and second pipes 221 and 222 may be made of any material, according to the design considerations of the refrigeration system in which the thermal energy storage assembly 220 is located. In one embodiment, one or both of the first and second pipes 221 and 222 is made of metal. In another embodiment, one or both of the first and second pipes 221 and 222 is made of plastic or another polymer. In addition, while the first and second pipes 221 and 222 are illustrated as having circular cross-sectional shapes, embodiments of the invention encompass pipes having any cross-sectional shapes, including squares, ovals, any other geometric shape, or any other shape.

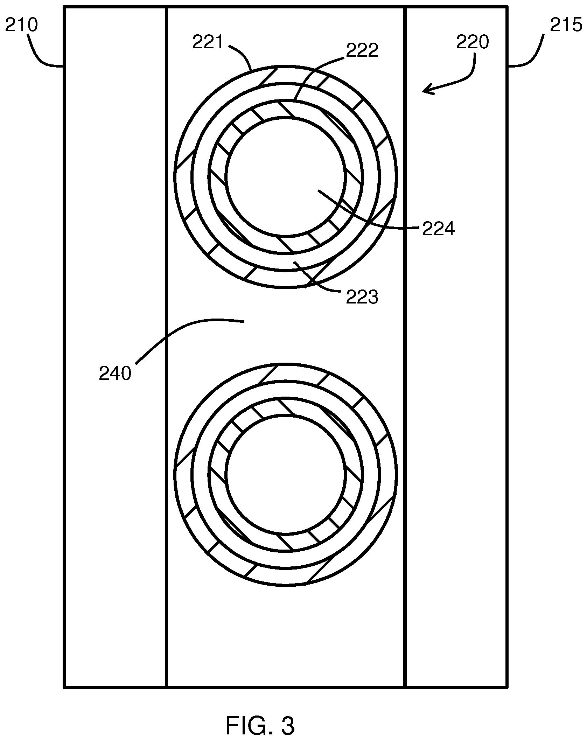

FIG. 2 illustrates a wall panel 210 of a compartment in which the thermal energy storage assembly 220 is located. As illustrated in FIG. 2, the thermal energy storage assembly 220 may be exposed to the atmosphere 230 within the compartment. Alternatively, as illustrated in FIG. 3, the thermal energy storage assembly 220 may be sandwiched between two wall panels 210 and 215. The area 240 between the wall panels 210 and 215, and between adjacent spans of the thermal energy storage assembly 220 may be filled with an insulating material. In one embodiment, the area between the storage assembly 220 and the inner wall panel 215 includes a material having heat conductivity to facilitate cooling of the wall panel 215 by the thermal energy storage assembly 220.

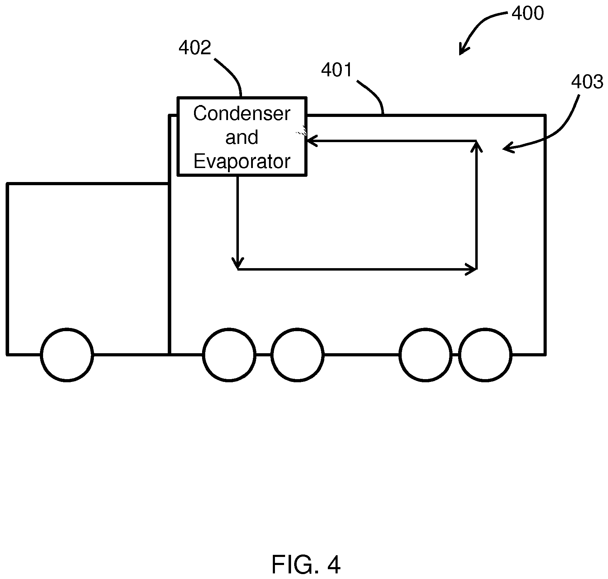

FIG. 4 illustrates a refrigerated vehicle 400 according to an embodiment of the invention. The vehicle 400 includes a refrigeration compartment 401 for refrigerating materials within the compartment 401. The vehicle 400 may include a condenser and evaporator 402 for cooling a heat transfer fluid flowing through a thermal energy storage assembly 403. As discussed above, the thermal energy storage assembly 403 may be located in the walls of the compartment 401, to save space for objects and materials within the compartment 401. Alternatively, the thermal energy storage assembly 403 may be attached to the walls of the compartment 401 and exposed to an atmosphere in the compartment 401

While the vehicle 400 of FIG. 4 is illustrate with the condenser and evaporator 402 included with the vehicle 400, in one embodiment the vehicle 400 does not include the condenser and evaporator 402. Instead, the vehicle 400 may be disconnected from a condenser and evaporator 402 while the vehicle 400 is travelling, and may be periodically connected to the condenser and evaporator 402 to cause the heat transfer fluid to flow through the thermal energy storage assembly 220.

Embodiments of the present invention include a unique configuration of an evaporator cooling a load, such as air circulating inside a truck, container or other compartment. The configuration includes charging a thermal storage and cooling the compartment air in a parallel mode. The refrigerant cools the air at the same time cools the heat transfer fluid which is circulated to the thermals storage assembly to charge the phase change materials. In embodiments of the invention, the stored refrigeration capacity can be discharged to the load either with or without the compression unit running, effectively increasing the maximum capacity for faster pull down.

In one embodiment, some of the circuits of an evaporator coil for a heat transfer fluid flow though to charge/discharge the thermal storage. This configuration effectively has better thermodynamic efficiency compared with a configuration using multiple heat exchangers. In addition, in one embodiment, the thermal storage (e.g. phase change material) is embedded in the insulation wall, reducing the cost for insulating an independent storage container. In one embodiment, plastic materials are used for the storage devices to eliminate metal corrosion. For example, referring to FIG. 2, the second pipe 222 may be made of plastic. The embedded phase control materials can function as a dynamic insulation, reducing the peak heat flux and effectively increasing R-value across the insulation wall at around the phase change temperatures.

While the invention has been described in detail in connection with only a limited number of embodiments, it should be readily understood that the invention is not limited to such disclosed embodiments. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A refrigeration system (100), comprising:
a cooling unit configured to cool a heat transfer fluid; and
a thermal energy storage assembly (130; 220; 403) configured to circulate the heat transfer fluid from the cooling unit and back to the cooling unit, the thermal energy storage assembly configured to refrigerate a compartment (401), the thermal energy storage assembly comprising:
a first pipe (221) configured to have the heat transfer fluid flow through a bore (223) of the first pipe;
a second pipe (222) surrounding the first pipe; and
a phase change material filling the space (224) between the first pipe and the second pipe, the phase change material storing thermal energy from the heat transfer fluid, **characterized in that** the phase change material acts as a robust refrigeration material that is able to absorb heat from an atmosphere (230) that is being cooled.

2. The refrigeration system (100) of claim 1, wherein the first pipe (221) and the second pipe (222) are co-axial.

3. The refrigeration system (100) of claim 1, wherein the thermal energy storage assembly (130; 220; 403) is located in a wall of the compartment.

4. The refrigeration system (100) of claim 3, wherein the thermal energy storage assembly (130; 220; 403) is exposed to an atmosphere (230) in the compartment (401).

5. The refrigeration system (100) of claim 3, wherein the thermal energy storage assembly (130; 220; 403) is sandwiched between two wall panels (210; 215) of a wall of the compartment, a space between the two wall panels (240) filled with an insulation material.

6. The refrigeration system (100) of claim 1, further comprising:
a heat transfer fluid transmission system between the cooling unit and the thermal energy storage assembly (130; 220; 403) to transmit the heat transfer fluid between the cooling unit and the thermal energy storage assembly; and
a pump (133) located along the heat transfer fluid system to increase a flow rate of the heat transfer fluid based on the pump being turned on.

7. The refrigeration system (100) of claim 6, wherein the cooling unit includes an evaporator (120),
the heat transfer fluid passes through the evaporator to exchange thermal energy with a refrigerant, and
the heat transfer fluid flows through the evaporator and exchanges thermal energy with the refrigerant based on the pump (133) being turned on.

8. A mobile refrigeration vehicle (400), comprising
the refrigeration system of any preceding claim, wherein the refrigeration system is used to cool a refrigerated compartment (401) having the thermal energy storage assembly (130; 220; 403) attached to at least one wall of the refrigerated compartment, wherein the thermal energy storage assembly is sandwiched between two wall panels (210; 215) of a wall of the compartment.

9. The mobile refrigeration vehicle (400) of claim 8, wherein the first pipe (221) and the second pipe (222) are co-axial.

10. The mobile refrigeration vehicle (400) of claim 8, wherein the thermal energy storage assembly (130; 220; 403) is located in a wall of the compartment (401).

11. The mobile refrigeration vehicle (400) of claim 10, wherein the thermal energy storage assembly (130; 220; 403) is exposed to an atmosphere in the compartment (401).

12. The mobile refrigeration vehicle (400) of claim 10, wherein the space between the two wall panels (240) and between adjacent lengths of the thermal energy storage assembly (130; 220; 403) being filled with an insulation material.

## Patentansprüche

1. Kälteanlage (100), umfassend:
eine Kühleinheit, die zum Kühlen eines Wärmeübertragungsfluids ausgestaltet ist; und
eine Wärmeenergie-Speicheranordnung (130; 220; 403), die dazu ausgestaltet ist, Wärmeübertragungsfluid von der Kühleinheit und zurück zur Kühleinheit zirkulieren zu lassen, wobei die Wärmeenergie-Speicheranordnung dazu ausgestaltet ist, eine Kammer (401) zu kühlen, wobei die Wärmeenergie-Speicheranordnung umfasst:
ein erstes Rohr (221), das dazu ausgestaltet ist, das Wärmeübertragungsfluid durch eine Bohrung (223) des ersten Rohrs strömen zu lassen;
ein zweites Rohr (222), das das erste Rohr umgibt; und
ein Phasenwechselmaterial, das den Raum (224) zwischen dem ersten Rohr und dem zweiten Rohr füllt, wobei das Phasenwechselmaterial Wärmeenergie vom Wärmeübertragungsfluid speichert,
**dadurch gekennzeichnet, dass** das Phasenwechselmaterial als ein robustes Kältematerial dient, das Wärme von einer Atmosphäre (230) absorbieren kann, die gekühlt wird.

2. Kälteanlage (100) nach Anspruch 1, wobei das erste Rohr (221) und das zweite Rohr (222) koaxial sind.

3. Kälteanlage (100) nach Anspruch 1, wobei die Wärmeenergie-Speicheranordnung (130; 220; 403) in einer Wand des Raums angeordnet ist.

4. Kälteanlage (100) nach Anspruch 3, wobei die Wärmeenergie-Speicheranordnung (130; 220; 403) einer Atmosphäre (230) in der Kammer (401) ausgesetzt ist.

5. Kälteanlage (100) nach Anspruch 3, wobei die Wärmeenergie-Speicheranordnung (130; 220; 403) zwischen zwei Wandplatten (210; 215) einer Wand der Kammer angeordnet ist, wobei ein Zwischenraum zwischen den Wandplatten (240) mit einem Isoliermaterial gefüllt ist.

6. Kälteanlage (100) nach Anspruch 1, ferner umfassend:
ein Wärmeübertragungsfluidübertragungssystem zwischen der Kühleinheit und der Wärmeenergie-Speicheranordnung (130; 220; 403) zum Transferieren des Wärmeübertragungsfluids zwischen der Kühleinheit und der Wärmeenergie-Speicheranordnung; und
eine Pumpe (133), die entlang dem Wärmeübertragungsfluidsystem angeordnet ist, um eine Strömungsrate des Wärmeübertragungsfluids auf Grundlage eines Einschaltens der Pumpe zu erhöhen.

7. Kälteanlage (100) nach Anspruch 6, wobei die Kühleinheit einen Verdampfer (120) beinhaltet,
das Wärmeübertragungsfluid durch den Verdampfer tritt, um Wärmeenergie mit einem Kältemittel auszutauschen, und
das Wärmeübertragungsfluid durch den Verdampfer strömt und Wärmeenergie mit dem Kältemittel auf Grundlage dessen austauscht, dass die Pumpe (133) eingeschaltet ist.

8. Mobiles Kühlfahrzeug (400), umfassend
die Kälteanlage nach einem der vorangehenden Ansprüche, wobei die Kälteanlage zum Kühlen einer gekühlten Kammer (401) verwendet wird, die die Wärmeenergie-Speicheranordnung (130; 220; 403) aufweist, die an wenigstens einer Wand der gekühlten Kammer angebracht ist, wobei die Wärmeenergie-Speicheranordnung zwischen zwei Wandplatten (210; 215) einer Wand der Kammer angeordnet ist.

9. Mobiles Kühlfahrzeug (400) nach Anspruch 8, wobei das erste Rohr (221) und das zweite Rohr (222) koaxial sind.

10. Mobiles Kühlfahrzeug (400) nach Anspruch 8, wobei die Wärmeenergie-Speicheranordnung (130; 220; 403) in einer Wand der Kammer (401) angeordnet ist.

11. Mobiles Kühlfahrzeug (400) nach Anspruch 10, wobei die Wärmeenergie-Speicheranordnung (130; 220; 403) einer Atmosphäre in der Kammer (401) ausgesetzt ist.

12. Mobiles Kühlfahrzeug (400) nach Anspruch 10, wobei der Zwischenraum zwischen den zwei Wandplatten (240) und zwischen benachbarten Längserstreckungen der Wärmeenergie-Speicheranordnung (130; 220; 403) mit einem Isoliermaterial gefüllt ist.

## Revendications

1. Système de réfrigération (100), comprenant :
une unité de refroidissement conçue pour refroidir un fluide caloporteur ; et
un ensemble de stockage d'énergie thermique (130 ; 220 ; 403) conçu pour faire circuler le fluide caloporteur depuis l'unité de refroidissement et le réacheminer vers l'unité de refroidissement, l'ensemble de stockage d'énergie thermique étant conçu pour réfrigérer un compartiment (401), l'ensemble de stockage d'énergie thermique comprenant :
un premier tuyau (221) conçu pour permettre au fluide caloporteur de s'écouler à travers un alésage (223) du premier tuyau ;
un second tuyau (222) entourant le premier tuyau ; et
un matériau de changement de phase remplissant l'espace (224) entre le premier tuyau et le second tuyau, le matériau de changement de phase stockant l'énergie thermique provenant du fluide caloporteur,
**caractérisé en ce que** le matériau de changement de phase agit en tant que matériau de réfrigération robuste capable d'absorber la chaleur d'une atmosphère (230) en cours de refroidissement.

2. Système de réfrigération (100) selon la revendication 1, dans lequel le premier tuyau (221) et le second tuyau (222) sont coaxiaux.

3. Système de réfrigération (100) selon la revendication 1, dans lequel l'ensemble de stockage d'énergie thermique (130 ; 220 ; 403) est situé dans une paroi du compartiment.

4. Système de réfrigération (100) selon la revendication 3, dans lequel l'ensemble de stockage d'énergie thermique (130 ; 220 ; 403) est exposé à une atmosphère (230) dans le compartiment (401).

5. Système de réfrigération (100) selon la revendication 3, dans lequel l'ensemble de stockage d'énergie thermique (130 ; 220 ; 403) est intercalé entre deux panneaux de paroi (210 ; 215) d'une paroi du compartiment, un espace entre les deux panneaux de paroi (240) étant rempli avec un matériau isolant.

6. Système de réfrigération (100) selon la revendication 1, comprenant en outre :
un système de transfert de fluide caloporteur entre l'unité de refroidissement et l'ensemble de stockage d'énergie thermique (130 ; 220 ; 403) pour transférer le fluide caloporteur entre l'unité de refroidissement et l'ensemble de stockage d'énergie thermique ; et
une pompe (133) située le long du système de transfert de fluide caloporteur pour augmenter le débit du fluide caloporteur lorsque l'on met la pompe en marche.

7. Système de réfrigération (100) selon la revendication 6, dans lequel l'unité de refroidissement comprend un évaporateur (120),
le fluide caloporteur traverse l'évaporateur pour échanger l'énergie thermique avec un agent réfrigérant, et
le fluide caloporteur s'écoule dans l'évaporateur et échange l'énergie thermique avec l'agent réfrigérant lorsque l'on met la pompe (133) en marche.

8. Véhicule de réfrigération mobile (400), comprenant
le système de réfrigération selon une quelconque revendication précédente, dans lequel le système de réfrigération est utilisé pour refroidir un compartiment réfrigéré (401) comportant l'ensemble de stockage d'énergie thermique (130 ; 220 ; 403) fixé à au moins une paroi du compartiment réfrigéré, dans lequel l'ensemble de stockage d'énergie thermique est intercalé entre deux panneaux de paroi (210 ; 215) d'une paroi du compartiment.

9. Véhicule de réfrigération mobile (400) selon la revendication 8, dans lequel le premier tuyau (221) et le second tuyau (222) sont coaxiaux.

10. Véhicule de réfrigération mobile (400) selon la revendication 8, dans lequel l'ensemble de stockage d'énergie thermique (130 ; 220 ; 403) est situé dans une paroi du compartiment (401).

11. Véhicule de réfrigération mobile (400) selon la revendication 10, dans lequel l'ensemble de stockage d'énergie thermique (130 ; 220 ; 403) est exposé à une atmosphère dans le compartiment (401).

12. Véhicule de réfrigération mobile (400) selon la revendication 10, dans lequel l'espace entre les deux panneaux de paroi (240) et entre des longueurs adjacentes de l'ensemble de stockage d'énergie thermique (130 ; 220 ; 403) est rempli avec un matériau isolant.
